(19) **Europäisches Patentamt / European Patent Office / Office européen des brevets**

(11) **EP 3 044 580 B1**

(12) **FASCICULE DE BREVET EUROPEEN**

(45) Date de publication et mention
de la délivrance du brevet:
**29.11.2017 Bulletin 2017/48**

(21) Numéro de dépôt: **14765910.6**

(22) Date de dépôt: **09.09.2014**

(51) Int Cl.:
*G01N 29/14* (2006.01)   *G01N 29/11* (2006.01)
*G01N 29/30* (2006.01)   *G01N 29/44* (2006.01)
*G01N 29/46* (2006.01)   *G01N 29/07* (2006.01)
*G01N 29/36* (2006.01)

(86) Numéro de dépôt international:
**PCT/EP2014/069186**

(87) Numéro de publication internationale:
**WO 2015/036398 (19.03.2015 Gazette 2015/11)**

(54) **PROCÉDÉ DE CONTRÔLE NON-DESTRUCTIF PAR ULTRASONS D'UNE PIÈCE PAR ANALYSES D'ÉCHOS**

VERFAHREN ZUR ZERSTÖRUNGSFREIEN ULTRASCHALLPRÜFUNG EINES BAUTEILS MITTELS ECHOANALYSE

METHOD FOR THE NON-DESTRUCTIVE ULTRASONIC TESTING OF A PART BY ECHO ANALYSIS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.09.2013 FR 1358779**

(43) Date de publication de la demande:
**20.07.2016 Bulletin 2016/29**

(73) Titulaire: **Airbus**
**31700 Blagnac (FR)**

(72) Inventeurs:
• **DOMINGUEZ, Nicolas**
  **F-31830 Plaisance du Touch (FR)**
• **GUIBERT, Frank**
  **F-31300 Toulouse (FR)**

(74) Mandataire: **Ipside**
**6, Impasse Michel Labrousse**
**31100 Toulouse (FR)**

(56) Documents cités:
**FR-A1- 2 930 344    JP-A- S55 146 038**

• **HAK-JOON KIM: "Transferring Distance-Amplitude Correction Curves Using Ultrasonic Modeling", AIP CONFERENCE PROCEEDINGS, vol. 700, 1 janvier 2004 (2004-01-01), pages 753-760, XP055121665, ISSN: 0094-243X, DOI: 10.1063/1.1711696**

## Description

### DOMAINE TECHNIQUE

La présente invention appartient au domaine du contrôle non-destructif par ultrasons d'une pièce, en particulier à la détermination d'une courbe d'amplification variable mise en oeuvre pour compenser l'amplitude d'échos ultrasonores renvoyés par la pièce.

### ÉTAT DE LA TECHNIQUE

Les procédés de contrôle non-destructif par ultrasons sont utilisés dans de nombreux domaines industriels. Ces contrôles sont particulièrement importants lorsque l'intégrité des pièces en service doit être garantie, notamment dans le cas de constructions aéronautiques.

Un dispositif de contrôle non-destructif par ultrasons comporte en général des équipements pour l'inspection et des équipements pour l'analyse des signaux acquis lors de l'inspection.

Les équipements pour l'inspection comportent au moins un transducteur ultrasonore, qui réalise une conversion d'un signal électrique en une onde ultrasonore et vice-versa, et un générateur/récepteur de signaux électriques qui est connecté au transducteur ultrasonore.

Les équipements pour l'analyse comportent des moyens d'acquisition des signaux reçus du générateur/récepteur, et des moyens de calcul pour le traitement des signaux acquis, comme par exemple pour isoler les échos ultrasonores, déterminer des niveaux d'amplitude, etc.

Dans le cadre d'une inspection d'une pièce par ultrasons, il est connu d'étalonner le dispositif de contrôle non-destructif par ultrasons de sorte que, si le matériau formant la pièce est sain, un réflecteur de référence répond avec la même amplitude, quelle que soit la profondeur à laquelle il se trouve dans la pièce, de manière à assurer un diagnostic iso-performances dans l'épaisseur de ladite pièce. Un tel réflecteur de référence peut être, selon les applications, un défaut de référence ou un élément de la pièce elle-même comme par exemple la face de fond de la pièce.

Afin de réaliser cette égalisation de l'amplitude des échos ultrasonores, il est connu de déterminer une courbe d'amplification variable de l'amplitude des échos ultrasonores permettant de compenser les effets de perte (atténuation intrinsèque du matériau, divergence du champ ultrasonore) à l'intérieur d'un matériau sain de même type que celui formant la pièce à inspecter. Cette courbe d'amplification variable est généralement désignée par TCG (« Time Corrected Gain ») ou DAC (« Distance Amplitude Correction ») suivant qu'elle est exprimée en fonction du temps ou de la distance. La correction de l'amplitude des échos ultrasonores renvoyés par la pièce peut alors être effectuée en temps réel lors de l'acquisition, ou en post-traitement sur les signaux acquis par les moyens d'acquisition.

Actuellement, avant chaque inspection d'une pièce au moyen d'un transducteur ultrasonore, la courbe d'amplification variable TCG/DAC est ajustée par un opérateur qui effectue, avec ledit transducteur ultrasonore, plusieurs acquisitions sur un échantillon de référence, en matériau sain de même type que celui formant la pièce à inspecter, comportant plusieurs réflecteurs de référence identiques à des profondeurs différentes, par exemple des défauts artificiels de dimensions identiques.

La courbe d'amplification variable TCG/DAC ainsi générée est limitée en précision par le nombre de réflecteurs de référence de l'échantillon de référence. En outre, l'établissement de ladite courbe d'amplification variable TCG/DAC nécessite, avant chaque inspection d'une pièce, plusieurs acquisitions (c'est-à-dire tirs) ultrasonores sur un échantillon de référence, ce qui rend l'établissement de ladite courbe d'amplification variable TCG/DAC chronophage, et ne facilite pas la mise en oeuvre et la comparaison de résultats dans des sites géographiques différents (portabilité de l'échantillon de référence).

### EXPOSÉ DE L'INVENTION

La présente invention a pour objectif de remédier à tout ou partie des limitations des solutions de l'art antérieur, notamment celles exposées ci-avant, en proposant une solution qui permette de déterminer, de façon automatique et rapide, en limitant au maximum les acquisitions préliminaires sur un échantillon de référence, une courbe d'amplification variable valable pour le matériau formant la pièce et le transducteur ultrasonore considéré.

A cet effet, et selon un premier aspect, l'invention concerne un procédé de contrôle non-destructif par ultrasons d'une pièce par analyse d'échos renvoyés par ladite pièce en réponse à l'émission d'une onde ultrasonore au moyen d'un transducteur ultrasonore, ledit procédé comportant une étape de détermination d'une courbe d'amplification variable et une étape de correction de l'amplitude des échos renvoyés par la pièce en fonction de la courbe d'amplification variable et des instants de réception desdits échos, caractérisé en ce que ledit procédé comporte des étapes de :

- obtention d'une fonction d'onde représentative du spectre fréquentiel des ondes ultrasonores émises par le transducteur ultrasonore,
- obtention de fonctions de transfert $F^m$ représentatives des réponses fréquentielles d'échantillons de référence $R^m$ du matériau formant ladite pièce, d'épaisseurs $e_m$ respectives différentes,
- calcul de valeurs d'atténuations de référence entre d'une part la fonction d'onde et, d'autre part, les résultats de calculs de filtrage de ladite fonction d'onde par les fonctions de transfert $F^m$ respectives des échantillons de référence $R^m$,

la courbe d'amplification variable étant déterminée en fonction des valeurs d'atténuations de référence.

De telles dispositions permettent de diminuer la durée de l'inspection de la pièce, et plus particulièrement de diminuer la durée nécessaire pour établir la courbe d'amplification variable.

En effet, selon l'art antérieur, la courbe d'amplification variable est établie en fonction de valeurs d'atténuations de référence calculées en fonction de signaux mesurés au cours d'inspections réelles d'échantillons de référence. Selon l'invention, les valeurs d'atténuation de référence sont calculées en fonction de signaux simulés, obtenus notamment par des calculs de filtrage de la fonction d'onde par les fonctions de transfert, qui reviennent à effectuer des inspections virtuelles d'échantillons de référence.

Dans des modes particuliers de mise en oeuvre, le procédé objet de l'invention peut comporter en outre l'une ou plusieurs des caractéristiques suivantes, prises isolément ou selon toutes les combinaisons techniquement possibles.

Dans un mode particulier de mise en oeuvre, la fonction d'onde est obtenue à partir d'une base de données dans laquelle ladite fonction d'onde a été préalablement mémorisée. De telles dispositions permettent d'accélérer l'établissement de la courbe d'amplification variable dans la mesure où l'étape d'obtention de la fonction d'onde consiste en une lecture de ladite fonction dans la base de données.

Dans un mode particulier de mise en oeuvre, la fonction d'onde est estimée en mesurant une onde ultrasonore émise par le transducteur ultrasonore dans un milieu de couplage en l'absence de ladite pièce ou d'échantillon de référence.

Dans un mode particulier de mise en oeuvre, les fonctions de transfert $F^m$ sont obtenues à partir d'une base de données dans laquelle lesdites fonctions de transfert ont été préalablement mémorisée et/ou calculées à partir d'au moins une fonction de transfert de référence obtenue à partir d'une base de données dans laquelle ladite fonction de transfert de référence a été préalablement mémorisée. De telles dispositions permettent d'accélérer l'établissement de la courbe d'amplification variable dans la mesure où l'étape d'obtention des fonctions de transfert consiste en une lecture desdites fonctions de transfert dans la base de données et/ou en une lecture de l'au moins une fonction de transfert de référence dans la base de données suivie de calculs numériques desdites fonctions de transfert.

Dans un mode particulier de mise en oeuvre, le procédé comporte une étape de mesure :

-    d'un spectre fréquentiel $S_R$ d'une onde ultrasonore ayant traversé un échantillon de référence réel $R_R$, d'épaisseur $d_R$, réalisé en matériau sain de même type que celui de la pièce,
-    d'un spectre fréquentiel $S$ d'une onde ultrasonore de même caractéristiques n'ayant pas traversé ledit échantillon de référence réel $R_R$,

dans lequel la fonction de transfert $F^m$ de l'échantillon de référence $R^m$ d'épaisseur $e_m$ est déterminée dans le domaine des fréquences en calculant pour des valeurs de fréquences $f$ discrètes l'expression :

$$F^m(f) = \exp\left(\frac{e_m}{a \cdot d_R}\right) \cdot \frac{|S_R(f)|}{A \cdot |S(f)|},$$

expression dans laquelle $a$ et $A$ sont des facteurs positifs.

De telles dispositions permettent de limiter au maximum les besoins d'inspection d'échantillons de référence, dans la mesure où plusieurs fonctions de transfert $F^m(f)$ sont calculées à partir des spectres fréquentiels $S(f)$ et $S_R(f)$ mesurés pour un seul échantillon de référence réel.

Avantageusement pour réduire la quantité de données qui doivent être mémorisées, la fonction de transfert $F^m$ de l'échantillon de référence $R^m$ et d'épaisseur $e_m$ est déterminée suivant l'expression :

$$F^m(f) = \exp\left(-\frac{\alpha_R(f) \cdot e_m}{20}\right),$$

où $\alpha_R(f)$ est une fonction de transfert de référence déterminée suivant l'expression :

$$\alpha_R(f) = \frac{1}{a \cdot d_R} \cdot 20 \cdot \log\left(\frac{A \cdot |S(f)|}{|S_R(f)|}\right).$$

Dans un mode particulier de mise en oeuvre, le procédé comporte une étape d'estimation de la vitesse de propagation des ondes ultrasonores dans la pièce, et dans lequel :

-    l'amplitude des échos renvoyés par la pièce est corrigée en fonction de la courbe d'amplification variable, des instants de réception desdits échos, et de la vitesse de propagation des ondes ultrasonores dans ladite pièce, ou
-    la courbe d'amplification variable est déterminée en fonction des valeurs d'atténuations de référence et de la vitesse de propagation des ondes ultrasonores dans ladite pièce.

## PRÉSENTATION DES FIGURES

L'invention sera mieux comprise à la lecture de la description suivante, donnée à titre d'exemple nullement limitatif, et faite en se référant aux figures qui représentent :

- Figure 1 : une représentation schématique d'un dispositif de contrôle non-destructif par ultrasons selon l'invention,
- Figure 2 : une représentation schématique des étapes d'un procédé de détermination d'une courbe d'amplification variable avec la durée de propagation d'une onde ultrasonore dans le matériau formant la pièce selon l'invention,
- Figure 3 : une représentation schématique d'un mode de détermination d'une fonction d'onde d'un transducteur ultrasonore,
- Figure 4 : un exemple d'une fonction d'onde dans le domaine temporel,
- Figure 5 : un exemple d'une fonction d'onde dans le domaine fréquentiel,
- Figures 6 et 7 : une représentation schématique d'un mode de caractérisation d'un échantillon de référence réel $R_R$,
- Figure 8 : un exemple d'une fonction d'atténuation de référence selon l'invention,
- Figure 9 : un exemple de fonction de transfert selon l'invention,
- Figures 10 et 11 : un exemple de filtrage d'une fonction d'onde par une fonction de transfert dans les domaines fréquentiel et temporel,
- Figure 12 : des exemples de modes de représentation de valeurs d'atténuation de référence selon l'invention.

Dans ces figures, des références identiques d'une figure à une autre désignent des éléments identiques ou analogues. Pour des raisons de clarté, les éléments représentés ne sont pas à l'échelle, sauf mention contraire.

## DESCRIPTION DÉTAILLÉE DE MODES DE RÉALISATION

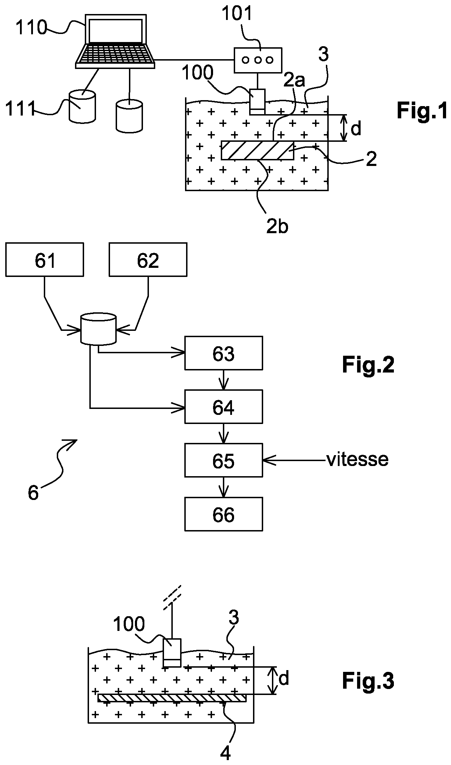

Tel que représenté sur la figure 1, un procédé 6 de contrôle non-destructif par ultrasons d'une pièce 2 met en oeuvre des équipements pour l'inspection ultrasonore, notamment un transducteur ultrasonore 100 et un générateur/récepteur 101 de signaux, généralement électriques, et des équipements pour l'analyse des données collectées au cours de l'inspection, tels que des moyens de calcul 110 (un microcontrôleur, un ordinateur disposant d'un microprocesseur, etc.) et des moyens de stockage 111 (une mémoire électronique et/ou magnétique, etc.) pour mémoriser les résultats de l'inspection ultrasonore.

Lors du contrôle non destructif par ultrasons, la pièce 2 est, de manière connue, au moins partiellement immergée dans un milieu de couplage 3 constitué d'eau ou de gel.

Le transducteur 100 est en général placé de sorte à émettre des ondes ultrasonores qui ont une incidence sensiblement normale à une face avant 2a de la pièce.

Le transducteur 100 de la figure 1 est utilisé en émission et en réception, et mesure des échos ultrasonores dus à des discontinuités d'impédances acoustiques.

Un écho, dit « de face », ou « écho d'entrée », est reçu pour une interface entre la face avant 2a de la pièce 2 et le milieu de couplage 3, et un écho, dit « de fond », est en général reçu pour une interface entre ledit milieu de couplage et une face arrière 2b de ladite pièce, située du côté de la pièce opposé au transducteur 100.

Dans la suite de l'exposé, les notations suivantes sont utilisées pour les représentations dans les domaines fréquentiel et temporel de fonctions : une fonction notée H peut correspondre à l'une ou l'autre des représentations, H(f) est la représentation fréquentielle de la fonction H, et H(t) est la représentation temporelle de ladite fonction H.

La figure 2 représente les principales étapes 61, 62, 63, 64, 65 et 66 d'un mode préféré de mise en oeuvre du procédé 6 de contrôle non-destructif. En particulier, l'étape 65 correspond à la détermination d'une courbe d'amplification variable, mise en oeuvre au cours d'étape 66 pour corriger l'amplitude des échos ultrasonores renvoyés par la pièce 2. Dans la suite de la description, on se place de manière non limitative dans le cas où l'on cherche à établir une courbe d'amplification variable permettant d'égaliser l'amplitude de l'écho de fond. Tel qu'indiqué précédemment, l'invention peut cependant être appliquée en considérant d'autres types de réflecteurs de référence, par exemple pour déterminer une courbe d'amplification variable permettant d'égaliser l'amplitude des échos ultrasonores renvoyés par des défauts de référence.

Les résultats de certaines étapes sont reproductibles et, si lesdits résultats sont mémorisés pour être réutilisés, lesdites étapes ne sont pas nécessairement exécutées à nouveau.

Dans l'étape 61 du procédé 6, le transducteur 100 ultrasonore est caractérisé.

La caractérisation du transducteur 100 consiste en la détermination d'une fonction d'onde $F_o$, représentative du spectre fréquentiel des ondes ultrasonores émises par ledit transducteur et reçues en l'absence de pièce. La fonction d'onde $F_o$ est par exemple déterminée en plaçant une plaque réfléchissante 4 en face du transducteur 100 dans le milieu de couplage 3, tel que représenté sur la figure 3, et en mesurant l'écho d'une onde ultrasonore réfléchie par la plaque réfléchissante 4.

De préférence, la plaque réfléchissante 4 est placée à une distance d du transducteur 100, sensiblement égale à la distance utilisée pour le contrôle non-destructif de la pièce 2, notamment dans le cas d'un transducteur ultrasonore focalisé.

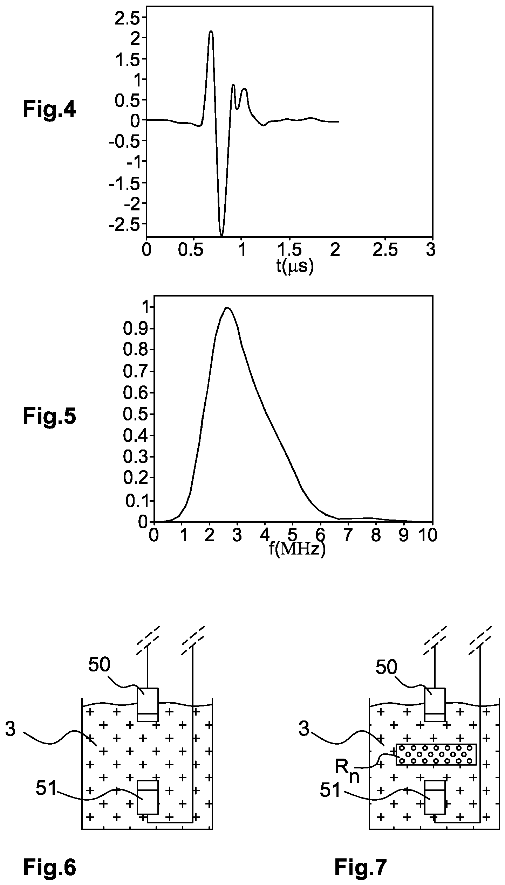

Un exemple d'écho mesuré est représenté sur la figure 4. Un tel écho est une représentation temporelle $F_o(t)$ de la fonction d'onde $F_o$ associée au transducteur 100.

La fonction d'onde $F_o(t)$ est de préférence transposée dans le domaine des fréquences, par exemple par transformée de Fourier, afin d'avoir une fonction d'onde $F_o(f)$ directement sous la forme d'un spectre fréquentiel. Le spectre fréquentiel associé à l'écho représenté sur la figure 4 est représenté sur la figure 5.

Les fréquences f considérées pour la fonction d'onde $F_o(f)$ sont de préférence des valeurs discrètes comprises dans un intervalle [$f_{MIN}$, $F_{MAX}$]. L'intervalle [$f_{MIN}$, $f_{MAX}$] est choisi de sorte que l'essentiel de la puissance des ondes ultrasonores émises par chaque transducteur ultrasonore pouvant être utilisé est compris dans ledit intervalle. Sur l'exemple de la figure 5, $f_{MIN}$ = 0Hz et $F_{MAX}$ = 10MHz.

La fonction d'onde $F_o$ associée au transducteur 100 dépend uniquement du transducteur 100 et ne dépend pas de la pièce 2 à contrôler.

La fonction d'onde associée au transducteur 100 est donc de préférence mémorisée dans la base de données pour être réutilisée pour déterminer une courbe d'amplification variable pour d'autres pièces que la pièce 2 au moyen du même transducteur 100. Dans ce cas, si la fonction d'onde $F_o$ a été préalablement établie et mémorisée dans la base de données, l'étape 61 n'est pas nécessairement exécutée sauf par exemple de façon sensiblement périodique pour tenir compte de l'évolution dans le temps des caractéristiques du transducteur 100. La base de données mémorise de préférence plusieurs fonctions d'onde $F_o1$, $F_o2$, $F_o3$ etc, correspondant à différents transducteurs ultrasonores susceptibles d'être mis en oeuvre lors d'inspections de pièces. La base de données peut également comporter, associées à un même transducteur ultrasonore, plusieurs fonctions d'ondes correspondant à différentes valeurs possibles de la distance d de contrôle.

Une telle base de données permet de gagner du temps sur la mise en oeuvre du procédé 6 de contrôle non-destructif en n'exécutant pas l'étape 61 de caractérisation du transducteur ultrasonore lorsque la fonction d'onde correspondante est déjà connue et mémorisée dans la base de données.

Au cours de l'étape 62, un matériau sain, de même type que le matériau formant la pièce 2, est caractérisé. Cette caractérisation est par exemple effectuée en inspectant au moins un échantillon de référence réel $R_R$ réalisé dans ledit matériau sain, de sorte à obtenir au moins une fonction de transfert de référence $\alpha_R$ représentative de la réponse fréquentielle dudit échantillon de référence réel.

L'au moins une fonction de transfert de référence $\alpha_R$ est déterminée en émettant des ondes ultrasonores en direction de l'échantillon de référence réel $R_R$, avec un transducteur ultrasonore (ou deux transducteurs dans le cas d'une inspection par transmission).

L'au moins une fonction de transfert de référence $\alpha_R$ est par exemple déterminée à partir d'un spectre fréquentiel S(f) d'une onde ultrasonore n'ayant pas traversé l'échantillon de référence réel $R_R$ et d'un spectre fréquentiel $S_R(f)$ d'une onde ultrasonore ayant traversé ledit échantillon de référence réel, qui sont mesurés de préférence sur l'intervalle [$f_{MIN}$, $f_{MAX}$] décrit précédemment.

Dans le cas d'une mesure des spectres fréquentiels par transmission, tel que représenté sur les figures 6 et 7, utilisant un transducteur 50 en émission et un transducteur 51 en réception , le spectre fréquentiel S(f) est mesuré sans l'échantillon de référence réel $R_R$ représenté en figure 6 et le spectre fréquentiel $S_R(f)$ est mesuré en intercalant ledit échantillon de référence entre les transducteurs 50 et 51 représenté en figure 7.

Dans un mode préféré de mise en oeuvre, la fonction de transfert de référence $\alpha_R$ est déterminée en calculant, pour chaque fréquence f considérée dans l'intervalle [$f_{MIN}$, $f_{MAX}$], l'expression suivante :

$$\alpha_R(f) = \frac{1}{d_R} \cdot 20 \cdot \log\left(\frac{T \cdot |S(f)|}{|S_R(f)|}\right)$$

expression dans laquelle T est un coefficient de transmission, prenant en compte les pertes aux interfaces correspondant à une face avant et une face arrière de l'échantillon de référence réel $R_R$.

Le coefficient T, dont la valeur est soit calculée soit mesurée, est égal à l'expression suivante :

$$T = \frac{4Z_{MC} \cdot Z_{CO}}{(Z_{MC} + Z_{CO})^2}$$

où $Z_{MC}$ est l'impédance acoustique du milieu de couplage et $Z_{CO}$ est l'impédance acoustique du matériau.

Dans le cas d'une inspection par double transmission de l'échantillon de référence réel $R_R$, c'est-à-dire dans un montage avec un transducteur et un miroir comme en figure 3, la fonction de transfert de référence $\alpha_R(f)$ est par exemple calculée suivant l'expression :

$$\alpha_R(f) = \frac{1}{2 \cdot d_R} \cdot 20 \cdot \log\left(\frac{T^2 \cdot |S(f)|}{|S_R(f)|}\right)$$

En effet, du fait de la double transmission à travers l'échantillon de référence réel $R_R$, le coefficient de transmission T et l'épaisseur $d_R$ dudit échantillon de référence doivent être pris en compte deux fois.

La fonction de transfert de référence $\alpha_R(f)$ est également calculable suivant d'autres méthodes, par exemple en comparant un spectre fréquentiel de l'écho de face et un spectre fréquentiel de l'écho de fond renvoyés par l'échantillon de référence réel, et il est entendu que le calcul de ladite fonction d'atténuation n'est pas limité aux méthodes décrites. De manière plus générale, la fonction de transfert de référence $\alpha_R(f)$ est calculée suivant l'expression :

$$\alpha_R(f) = \frac{1}{a \cdot d_R} \cdot 20 \cdot \log\left(\frac{A \cdot |S(f)|}{|S_R(f)|}\right)$$

où a et A sont des facteurs réels qui dépendent du mode d'inspection mis en oeuvre pour mesurer les spectres fréquentiels S(f) et $S_R(f)$ (a = 1 et A = T pour une inspection par transmission, a = 2 et A = $T^2$ pour une inspection par double transmission).

Sous cette forme, la fonction de transfert de référence $\alpha_R$ correspond à une réponse fréquentielle par unité de longueur, et peut être aisément utilisée pour calculer des fonctions de transfert $F^m$ pour des échantillons de référence (virtuels) $R^m$ d'épaisseurs $e_m$ arbitraires, suivant l'expression suivante :

$$F^m(f) = \exp\left(-\frac{\alpha_R(f) \cdot e_m}{20}\right).$$

La fonction de transfert $F^m(f)$ est également calculable directement à partir des spectres fréquentiels S(f) et $S_R(f)$, et le calcul ou non de ladite fonction de transfert de référence dépend du mode de mise en oeuvre choisi. La fonction de transfert $F^m(f)$ est par exemple déterminée directement suivant l'expression générale suivante :

$$F^m(f) = \exp\left(\frac{e_m}{ad_R}\right) \cdot \frac{|S_R(f)|}{A|S(f)|}.$$

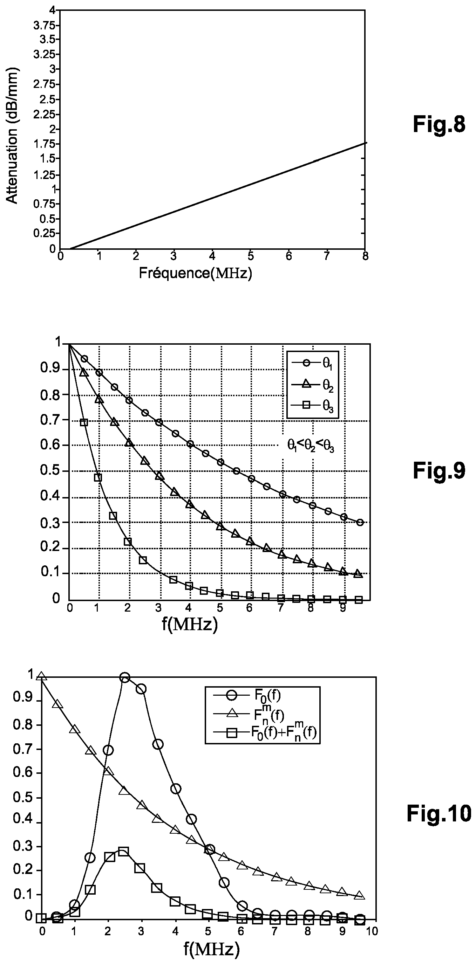

Une fonction de transfert de référence $\alpha_R(f)$ est représentée sur la figure 8 et des fonctions de transfert $F^m$, pour des échantillons de référence $R^m$ d'épaisseurs $e_m$, sont représentées sur la figure 9.

Il est à noter que la fonction de transfert de référence $\alpha_R$ et les fonctions de transfert $F^m$ ne dépendent pas du transducteur ultrasonore utilisé mais seulement des caractéristiques des échantillons de référence réels $R_R$. De même que pour les fonctions d'onde $F_o$, la ou les fonctions de transfert de référence $\alpha_R$ et/ou les fonctions de transfert $F^m$ sont de préférence mémorisées dans une base de données pour être réutilisées. Ainsi, pour un matériau sain donné, l'étape 62 de caractérisation, pour laquelle l'inspection d'au moins un échantillon de référence réel $R_R$ est effectuée, n'a pas à être exécutée à nouveau pour les inspections ultérieures de pièces réalisées dans le même matériau sain. La base de données mémorise de préférence plusieurs fonctions de transfert de référence $\alpha_R$ et/ou fonctions de transfert $F^m$ correspondant à différents types de matériaux sains.

L'étape 63 du procédé 6 de contrôle non-destructif correspond à une étape d'obtention de fonctions de transfert $F^m$ pour des échantillons de référence $R^m$ pour des épaisseurs $e_m$ (1 ≤ m ≤ M) différentes adaptées à l'épaisseur de la pièce 2 à contrôler. Plus particulièrement, les épaisseurs $e_m$ considérées sont avantageusement égales ou inférieures à l'épaisseur de la pièce 2. Si les fonctions de transfert $F^m$, associées à de telles épaisseurs $e_m$ égales ou inférieures à l'épaisseur de la pièce 2, se trouvent dans la base de données, l'étape 63 consiste en une lecture desdites fonctions de transfert $F^m$ dans ladite base de données. Dans le cas contraire, lesdites fonctions de transfert $F^m$ sont par exemple calculées à partir de la fonction de transfert de référence $\alpha_R$ préalablement mémorisée dans la base de données.

Dans l'étape 64 du procédé 6 de contrôle non-destructif, on calcule des valeurs d'atténuation de référence par les échantillons de référence $R^m$ d'épaisseurs $e_m$ dont les fonctions de transfert $F^m$ ont été obtenues au cours de l'étape 63. Lesdites valeurs d'atténuation de référence sont calculées en utilisant la fonction d'onde $F_o$ caractéristique du transducteur 100, obtenue à partir de la base de données, et les fonctions de transfert $F^m$ (1 ≤ m ≤ M) caractéristiques des échantillons de référence $R^m$ d'épaisseurs $e_m$.

Pour simuler l'atténuation d'ondes ultrasonores du transducteur 100 par l'échantillon de référence $R^m$ d'épaisseur $e_m$, la fonction d'onde $F_o$ associée au transducteur 100 est filtrée par la fonction de transfert $F^m$.

Le filtrage est calculé, de manière connue, dans le domaine temporel ou le domaine fréquentiel. Dans le cas d'un filtrage calculé dans le domaine fréquentiel, le produit de la fonction de transfert par la fonction d'onde $F^m(f) \cdot F_o(f)$ est calculé pour chaque fréquence f considérée dans l'intervalle [$f_{MIN}$, $f_{MAX}$].

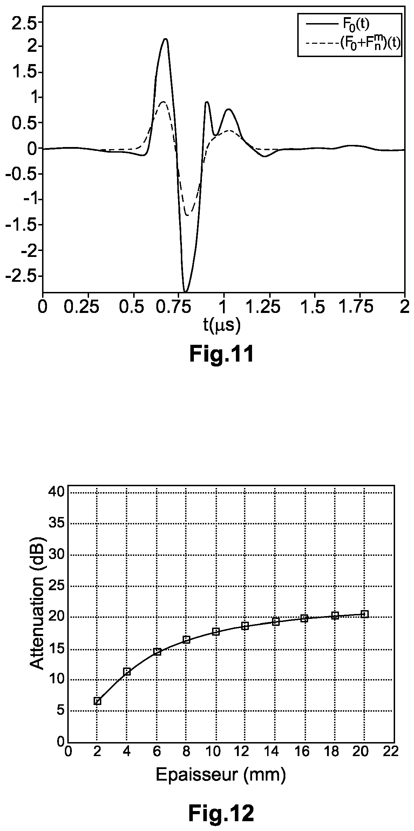

Un exemple illustrant le calcul du filtrage dans le domaine fréquentiel est représenté sur la figure 10. Le résultat du calcul du filtrage est également représenté dans le domaine temporel sur la figure 11, sous la référence $F^m(f) \cdot F_o(f)$.

Une valeur d'atténuation de référence est calculée pour chaque échantillon de référence $R^m$ (1 ≤ m ≤ M), par exemple en calculant le rapport des puissances de la fonction d'onde $F_o$ avant et après filtrage, lesdites puissances étant calculées par intégration des spectres fréquentiels $F_o(f)$ et $F^m(f) \cdot F_o(f)$. La valeur d'atténuation de référence est dans un autre mode de calcul estimée dans le domaine temporel en calculant un rapport des valeurs des extrema de la fonction d'onde $F_o(t)$ avant et après filtrage.

En figure 12, des valeurs d'atténuations de référence sont représentées en fonction d'épaisseurs différentes.

En étape 65, la courbe d'amplification variable est déterminée en fonction des valeurs d'atténuations de référence déterminées à l'étape 64. Dans l'exemple illustré par la figure 2, la courbe d'amplification variable TCG, exprimée en fonction du temps, et est par conséquent déterminée en fonction également d'une estimation de la vitesse de propagation des ondes ultrasonores dans la pièce 2, afin d'effectuer la conversion des épaisseurs $e_m$ en temps de propagation.

En étape 66, donc une fois que la courbe d'amplification variable TCG est déterminée, l'inspection de la pièce 2 est réalisée et l'amplitude des échos ultrasonores renvoyés par la pièce 2 est corrigée en fonction de ladite courbe d'amplification variable TCG et des instants de réception desdits échos ultrasonores. La correction de l'amplitude des échos ultrasonores renvoyés par la pièce 2 peut être effectuée en temps réel lors de l'inspection, ou en post-traitement sur les signaux acquis lors de l'inspection. Du fait de cette correction, l'écho de fond aura la même amplitude que l'écho d'entrée si le matériau de la pièce 2 est sain.

Dans le cas d'une courbe d'amplification variable DAC, l'estimation de la vitesse de propagation des ondes ultrasonores dans la pièce 2 est utilisée lors de la correction, afin de convertir les instants de réception des échos ultrasonores en distances parcourues.

La description ci-avant illustre clairement que par ses différentes caractéristiques et leurs avantages, la présente invention atteint les objectifs qu'elle s'était fixés. En particulier, la présente invention permet de déterminer une courbe d'amplification variable de manière simple et rapide grâce à la détermination des valeurs d'atténuations de référence par simulation numérique plutôt que par inspection réelle d'échantillons de référence, en réutilisant des fonctions d'ondes et des fonctions de transfert mémorisées dans une base de données.

## Revendications

**1.** - Procédé (6) de contrôle non-destructif par ultrasons d'une pièce (2) par analyse d'échos renvoyés par ladite pièce (2) en réponse à l'émission d'une onde ultrasonore au moyen d'un transducteur ultrasonore (100), ledit procédé comportant une étape de détermination d'une courbe d'amplification variable et une étape de correction de l'amplitude des échos renvoyés par la pièce (2) en fonction de la courbe d'amplification variable et des instants de réception desdits échos, **caractérisé en ce que** ledit procédé comporte des étapes de :

- obtention d'une fonction d'onde représentative du spectre fréquentiel des ondes ultrasonores émises par le transducteur ultrasonore (100),
- obtention de fonctions de transfert $F^m$ représentatives des réponses fréquentielles d'échantillons de référence $R^m$ du matériau formant ladite pièce, d'épaisseurs $e_m$ respectives différentes,
- calcul de valeurs d'atténuations de référence entre d'une part la fonction d'onde et, d'autre part, les résultats de calculs de filtrage de ladite fonction d'onde par les fonctions de transfert $F^m$ respectives des échantillons de référence $R^m$,

la courbe d'amplification variable étant déterminée en fonction des valeurs d'atténuations de référence.

**2.** - Procédé (6) selon la revendication 1, dans lequel la fonction d'onde est obtenue à partir d'une base de données dans laquelle ladite fonction d'onde a été préalablement mémorisée.

**3.** - Procédé (6) selon l'une des revendications 1 à 2, dans lequel la fonction d'onde est estimée en mesurant une onde ultrasonore émise par le transducteur ultrasonore (100) dans un milieu de couplage (3) en l'absence de ladite pièce (2) ou d'échantillon de référence.

**4.** - Procédé (6) selon l'une des revendications précédentes, dans lequel les fonctions de transfert $F^m$ sont obtenues à partir d'une base de données dans laquelle lesdites fonctions de transfert ont été préalablement mémorisée et/ou calculées à partir d'au moins une fonction de transfert de référence obtenue à partir d'une base de données dans laquelle ladite fonction de transfert de référence a été préalablement mémorisée.

**5.** - Procédé (6) selon l'une des revendications précédentes, comportant une étape de mesure :

- d'un spectre fréquentiel $S_R$ d'une onde ultrasonore ayant traversé un échantillon de référence réel $R_R$, d'épaisseur $d_R$, réalisé en matériau sain de même type que celui de la pièce (2),
- d'un spectre fréquentiel $S$ d'une onde ultrasonore de même caractéristiques n'ayant pas traversé ledit échantillon de référence réel $R_R$,

dans lequel la fonction de transfert $F^m$ de l'échantillon de référence $R^m$ d'épaisseur $e_m$ est déterminée dans le domaine des fréquences en calculant pour des valeurs de fréquences f discrètes l'expression :

$$F^m(f) = \exp\left(\frac{e_m}{a \cdot d_R}\right) \cdot \frac{|S_R(f)|}{A \cdot |S(f)|},$$

expression dans laquelle a et A sont des facteurs positifs.

**6.** - Procédé (6) selon la revendication 5, dans lequel la fonction de transfert $F^m$ de l'échantillon de référence $R^m$ d'épaisseur $e_m$ est déterminée suivant l'expression :

$$F^m(f) = \exp\left(-\frac{\alpha_R(f) \cdot e_m}{20}\right),$$

où $\alpha_R(f)$ est une fonction de transfert de référence déterminée suivant l'expression :

$$\alpha_R(f) = \frac{1}{a \cdot d_R} \cdot 20 \cdot \log\left(\frac{A \cdot |S(f)|}{|S_R(f)|}\right).$$

7. - Procédé (6) selon l'une des revendications précédentes, comportant une étape d'estimation de la vitesse de propagation des ondes ultrasonores dans la pièce (2), et dans lequel :

    - l'amplitude des échos renvoyés par la pièce (2) est corrigée en fonction de la courbe d'amplification variable, des instants de réception desdits échos, et de la vitesse de propagation des ondes ultrasonores dans ladite pièce, ou
    - la courbe d'amplification variable est déterminée en fonction des valeurs d'atténuations de référence et de la vitesse de propagation des ondes ultrasonores dans ladite pièce.

**Patentansprüche**

1. Verfahren (6) zur zerstörungsfreien Ultraschallprüfung eines Bauteils (2) mittels Analyse der durch das Bauteil (2) in Reaktion auf das Senden einer Ultraschallwelle unter Verwendung eines Ultraschallwandlers (100) wiedergegebenen Echos, wobei das Verfahren einen Schritt des Bestimmens einer variablen Verstärkungskurve und einen Schritt des Korrigierens der Amplitude der durch das Bauteil (2) wiedergegebenen Echos in Abhängigkeit von der variablen Verstärkungskurve und den Empfangszeiten der Echos umfasst, **dadurch gekennzeichnet, dass** das Verfahren die folgenden Schritte umfasst:

    - Erhalt einer Wellenfunktion, die für das Frequenzspektrum der durch den Ultraschallwandler (100) gesendeten Ultraschallwellen repräsentativ ist,
    - Erhalt von Übertragungsfunktionen $F^m$, die für die Frequenzcharakteristika von Referenzproben $R^m$ des das Bauteil bildenden Materials mit jeweils unterschiedlichen Dicken $e_m$ repräsentativ sind,
    - Berechnen von Referenzdämpfungswerten zwischen der Wellenfunktion einerseits und den Ergebnissen der Filterberechnungen der Wellenfunktion durch die jeweiligen Übertragungsfunktionen $F^m$ der Referenzproben $R^m$ andererseits,

wobei die variable Verstärkungskurve entsprechend den Referenzdämpfungswerten bestimmt wird.

2. Verfahren (6) nach Anspruch 1, bei dem die Wellenfunktion aus einer Datenbank erhalten wird, in der diese Wellenfunktion vorab gespeichert wurde.

3. Verfahren (6) nach einem der Ansprüche 1 bis 2, bei dem die Wellenfunktion durch Messen einer durch den Ultraschallwandler (100) in einem Koppelmedium (3) in Abwesenheit des Bauteils (2) oder einer Referenzprobe gesendeten Ultraschallwelle geschätzt wird.

4. Verfahren (6) nach einem der vorangehenden Ansprüche, bei dem die Übertragungsfunktionen $F^m$ aus einer Datenbank erhalten werden, in der die Übertragungsfunktionen vorab gespeichert wurden und/oder ausgehend von zumindest einer Referenzübertragungsfunktion berechnet werden, die aus einer Datenbank hergestellt wurde, in der diese Referenzübertragungsfunktion vorab gespeichert wurde.

5. Verfahren (6) nach einem der vorangehenden Ansprüche, umfassend einen Schritt des Messens:

    - eines Frequenzspektrums $S_R$ einer Ultraschallwelle, die durch eine reale Referenzprobe $R_R$ mit einer Dicke $d_R$ gelaufen ist, die aus der gleichen Art von Material wie das des Bauteils (2) besteht,
    - eines Frequenzspektrums $S$ einer Ultraschallwelle mit gleichen Merkmalen, die nicht durch die reale Referenzprobe $R_R$ gelaufen ist, wobei die Übertragungsfunktion $F^m$ der Referenzprobe $R^m$ mit der Dicke $e_m$ in dem Frequenzbereich bestimmt wird, indem der folgende Ausdruck für einzelne Frequenzwerte f berechnet wird:

$$F^m(f) = \exp\left(\frac{e_m}{a \cdot d_R}\right) \cdot \frac{|S_R(f)|}{A \cdot |S(f)|},$$

wobei in dem Ausdruck a und A positive Faktoren sind.

6. Verfahren (6) nach Anspruch 5, bei dem die Übertragungsfunktion $F^m$ der Referenzprobe $R^m$ mit der Dicke $e_m$ gemäß dem folgenden Ausdruck bestimmt wird:

$$F^m(f) = \exp\left(-\frac{\alpha_R(f) \cdot e_m}{20}\right),$$

wobei $\alpha_R(f)$ eine Referenzübertragungsfunktion gemäß dem folgenden Ausdruck ist:

$$\alpha_R(f) = \frac{1}{a \cdot d_R} \cdot 20 \cdot \log\left(\frac{A \cdot |S(f)|}{|S_R(f)|}\right).$$

**7.** Verfahren (6) nach einem der vorangehenden Ansprüche, umfassend einen Schritt des Schätzens der Ausbreitungsgeschwindigkeit der Ultraschallwellen in dem Bauteil (2), wobei:

    - die Amplitude der durch das Bauteil (2) wiedergegebenen Echos in Abhängigkeit von der variablen Verstärkungskurve, den Empfangszeiten dieser Echos und der Ausbreitungsgeschwindigkeit der Ultraschallwellen in diesem Bauteil korrigiert wird, oder
    - die variable Verstärkungskurve in Abhängigkeit von den Referenzdämpfungswerten und der Ausbreitungsgeschwindigkeit der Ultraschallwellen in diesem Bauteil bestimmt wird.

**Claims**

**1.** Method (6) of non-destructive ultrasonic testing of a part (2) by analysis of echoes returned by said part (2) in response to the emission of an ultrasound wave by means of an ultrasound transducer (100), said method including a step of determination of a variable gain curve and a step of correction of the amplitude of the echoes returned by the part (2) as a function of the variable gain curve and of the times of reception of said echoes, **characterized in that** said method includes steps of:

    - obtaining a wave function representative of the frequency spectrum of the ultrasound waves emitted by the ultrasound transducer (100),
    - obtaining transfer functions $F^m$ representative of the frequency responses of reference samples $R^m$ of the material forming said part, with respective different thicknesses $e_m$,
    - calculating reference attenuation values between on the one hand the wave function and on the other hand the results of calculations that filter said wave function by the respective transfer functions $F^m$ of the reference samples $R^m$,

the variable gain curve being determined as a function of the reference attenuation values.

**2.** Method (6) according to Claim 1, wherein the wave function is obtained from a database in which said wave function has been stored beforehand.

**3.** Method (6) according to one of Claims 1 and 2, wherein the wave function is estimated by measuring an ultrasound wave emitted by the ultrasound transducer (100) into a coupling medium (3) in the absence of said part (2) or reference sample.

**4.** Method (6) according to one of the preceding claims, wherein the transfer functions $F^m$ are obtained from a database in which said transfer functions have been stored beforehand and/or calculated on the basis of at least one reference transfer function obtained from a database in which said reference transfer function has been stored beforehand.

**5.** Method (6) according to one of the preceding claims, including a step of measuring:

    - a frequency spectrum $S_R$ of an ultrasound wave that has passed through a real reference sample $R_R$ of thickness $d_R$ made of a healthy material of the same type as that of the part (2),
    - a frequency spectrum $S$ of an ultrasound wave with the same characteristics that has not passed through said real reference sample $R_R$,

wherein the transfer function $F^m$ of the reference sample $R^m$ of thickness $e_m$ is determined in the frequency domain by calculating for discrete frequency values $f$ the expression:

$$F^m(f) = \exp\left(\frac{e_m}{a \cdot d_R}\right) \cdot \frac{|S_R(f)|}{A \cdot |S(f)|},$$

in which expression $a$ and $A$ are positive factors.

**6.** Method (6) according to Claim 5, wherein the transfer function $F^m$ of the reference sample $R^m$ of thickness $e_m$ is determined in accordance with the expression:

$$F^m(f) = \exp\left(-\frac{\alpha_R(f) \cdot e_m}{20}\right),$$

wherein $\alpha_R(f)$ is a reference transfer function determined in accordance with the expression:

$$\alpha_R(f) = \frac{1}{a \cdot d_R} \cdot 20 \cdot \log\left(\frac{A \cdot |S(f)|}{|S_R(f)|}\right),$$

**7.** Method (6) according to one of the preceding claims, including a step of estimating the propagation speed of the ultrasound waves in the part (2), and wherein:

    - the amplitude of the echoes returned by the part (2) is corrected as a function of the variable gain curve, the times of reception of said echoes and the propagation speed of the ultrasound waves in said part, or

- the variable gain curve is determined as a function of the reference attenuation values and the propagation speed of the ultrasound waves in said part.

Fig.1

Fig.2

Fig.3

**Fig.4**

**Fig.5**

**Fig.6**

**Fig.7**

Fig.8

Fig.9

Fig.10

**Fig.11**

**Fig.12**